# EUROPEAN PATENT SPECIFICATION

(11) **EP 1 894 784 B1**
(45) Date of publication and mention of the grant of the patent: **01.06.2011**
(21) Application number: 07115052.8
(22) Date of filing: 27.08.2007
(51) Int. Cl.: B60R 5/04, B60R 13/01, B60P 3/14

(54) **Drawer unit for vans**
Schubkasteneinheit für Lieferwagen
Unité tiroir pour fourgons

(30) Priority: 28.08.2006 IT PD20060319
(43) Date of publication of application: 05.03.2008
(73) Proprietor: Francom S.P.A., 36022 Cassola (VI) (IT)
(72) Inventor: Comunello, Luca, 36022 Cassola ( Vicenza ) (IT)
(74) Representative: Gallo, Luca

(56) References cited:
- WO-A-91/07296
- WO-A-2006/057596
- DE-A1- 10 047 541
- FR-A- 2 539 970
- US-A- 1 556 353
- US-A1- 2004 012 314

## Description

### Field of application

The present invention concerns a drawer unit for vans and is classifiable within the industrial sector for the production of professional fittings and accessories for vans or more generally within the sector of furnishings for vans.

The drawer unit in question allows the storage and transportation of tools, equipment, etc, in a safe and orderly manner, in order to meet the professional requirements of companies in the most widely varying sectors of technology (telephone engineering, hydraulic, mechanical, electrical or other sectors).

### Background art

On the market there exist various designs of drawer units envisaged for fitting-out vans or the like, said designs being developed with aim of using the maximum amount of space available and for this purpose extending heightwise with varying depths so as to follow the internal shape of the van.

For example, a first design of a drawer unit shown in Figure A is known, said design comprising a plurality of pivoting drawers C which are organized in rows arranged above each other and supported by means of a metal structure S which is fixed at the rear to the walls P of the van. The drawers C have a projecting handle M for the opening and closing movement and are locked securely in this latter position by means of a locking system F consisting of a rigid metal rod which is folded at the ends so as to be pivotably mounted on the sides of the drawers situated at the ends of each row.

In order to open any drawer in a row it is necessary to raise the safety lock and then operate the projecting handle.

This design of drawer unit with a flush locking system has proved in practice to be not devoid of drawbacks. A first drawback consists in the fact that the lateral attachment of the rod prevents the possibility of joining on the sides of the drawer unit other modules which are combined to form the furnishing within the van. A second drawback consists in the fact that, during travel of the van, this locking system gives rise to noisy vibrations. A third drawback consists in the poor practical design of this locking system which locks not a single drawer but exclusively a plurality of drawers which form a row in the drawer unit. A further drawback lies in the fact that, if the row of drawers following the shape of the van is inclined downwards, releasing of the safety lock results in simultaneous opening by means of gravity of all the drawers.

Figure B shows a further example of a drawer unit of the conventional type, upon which the two-part form of claim 1 is based and which is provided with a box-shaped containing body D for one or more drawers C which open in pivoting fashion by means of the handle M. The containing body is provided externally with guides G for allowing fixing to other modules able to form the furnishing of the van or to other similar containing bodies for forming larger size drawer units. Fixing to the walls of the van is performed by means of a special-purpose metal structure which is able to engage with the abovementioned guides provided on the outer wall of the containing bodies.

The system for fixing this drawer unit, as well as the systems for fixing the other drawer units for vans available nowadays on the market, cannot be used in a versatile manner for mounting in simple and practical fashion the single drawer unit depending on the various fittings which may be required in the van and which may require the arrangement of different modules in different positions in order to meet best the various operating requirements for which the van is intended.

In the sector in question there exists the need to be able to fix the drawer units to the van together with the other modules easily, without particular restrictions in the design of the furnishing or without the need to design special complex metal support structures for each individual fitting. The modules which may form the furnishing of a van and with which the drawer unit must be combined in a versatile manner are, for example: wheel housing covers, vice support units, worktops, cabinets, shelving and many other units.

### Disclosure of the invention

In this situation the main object of the present invention is to overcome the drawbacks of the art known hitherto, providing a drawer unit for vans which can be easily used with any fitting inside a van, being able to be mounted easily in relation to the other modules envisaged and able to be easily fixed to the van.

Another object of the present invention is to provide a drawer unit for vans, which is not bulky and which is able to follow in an optimum manner the internal shape of any van.

A further object of the present invention is to provide a drawer unit for vans which is constructionally simple and economical to produce and operationally entirely secure and reliable.

A drawer unit according to the present invention is defined in independent claim 1.

### Brief description of the drawings

The technical features of the invention in accordance with the abovementioned objects may be clearly determined from the contents of the claims indicated below and the advantages thereof will emerge more clearly from the detailed description which follows, provided with reference to the accompanying drawings which show a purely exemplary and non-limiting embodiment thereof, where:

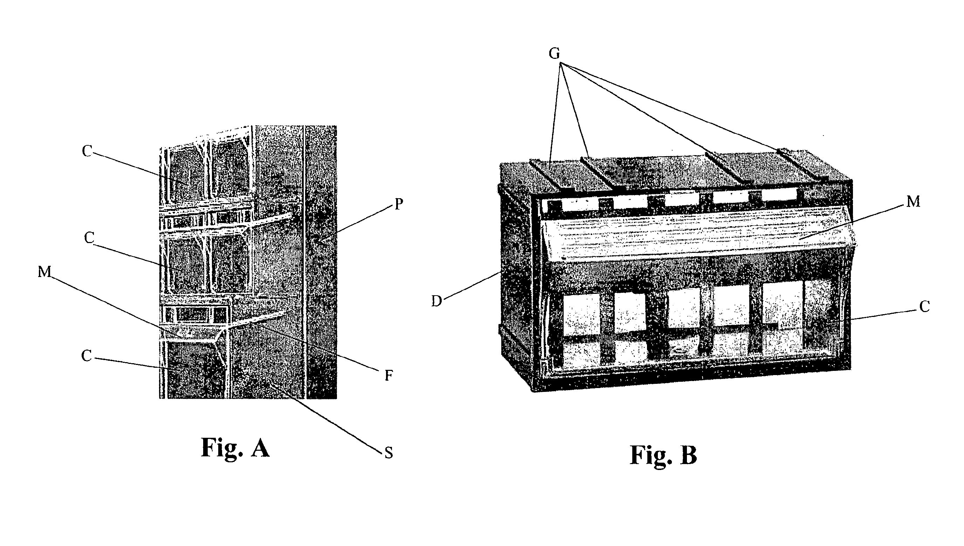

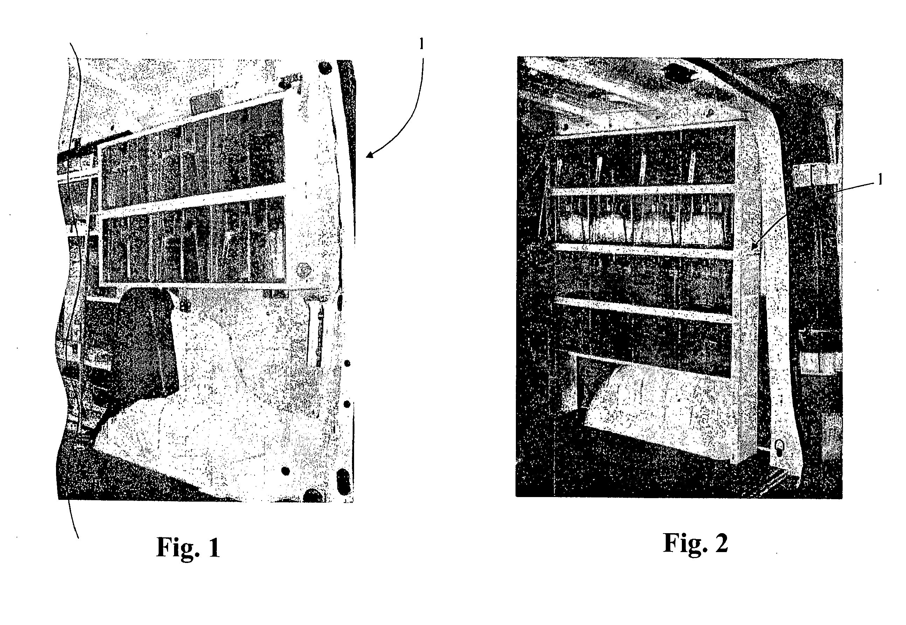

**FIGS. 1 and 2** show two possible furnished arrangements inside a van with the drawer unit according to the present invention;
**FIGS. 3 and 4** show a front view of a drawer unit according to the invention with the drawers closed and open, respectively;
**FIG. 5** shows a side view of the drawer unit according to Figure 4;
**FIGS. 6A and 6B** show a front view of two different designs of drawer unit from which the drawers have been removed;

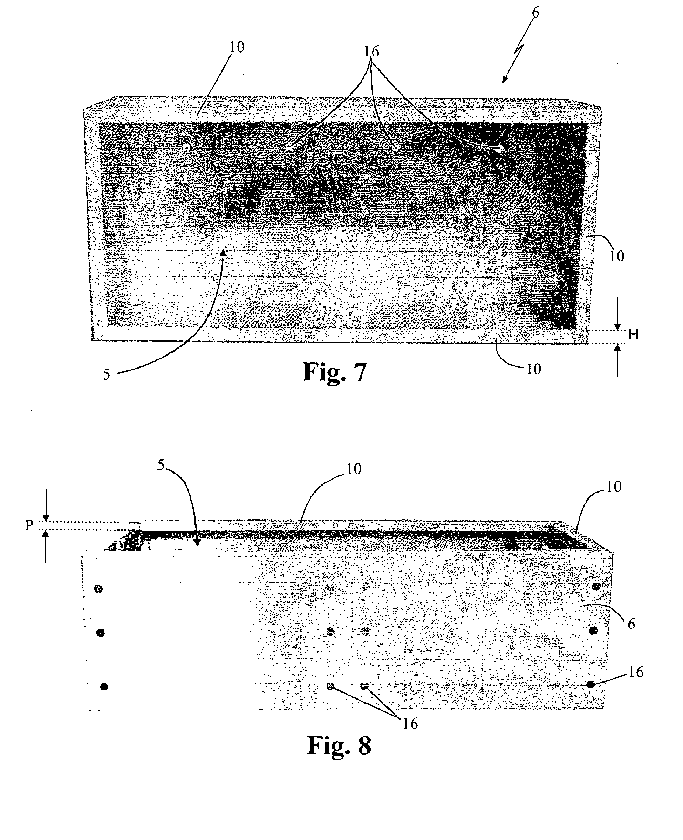

**FIGS. 7 and 8** show, respectively, a front view and a perspective view, from below, of a detail of the drawer unit according to the invention, relating to a support structure;
**FIGS. 9, 10, 11 and 12** show, respectively, a front view, a bottom view, a rear view and a side view of a detail of the drawer unit according to the invention, relating to a containing body;

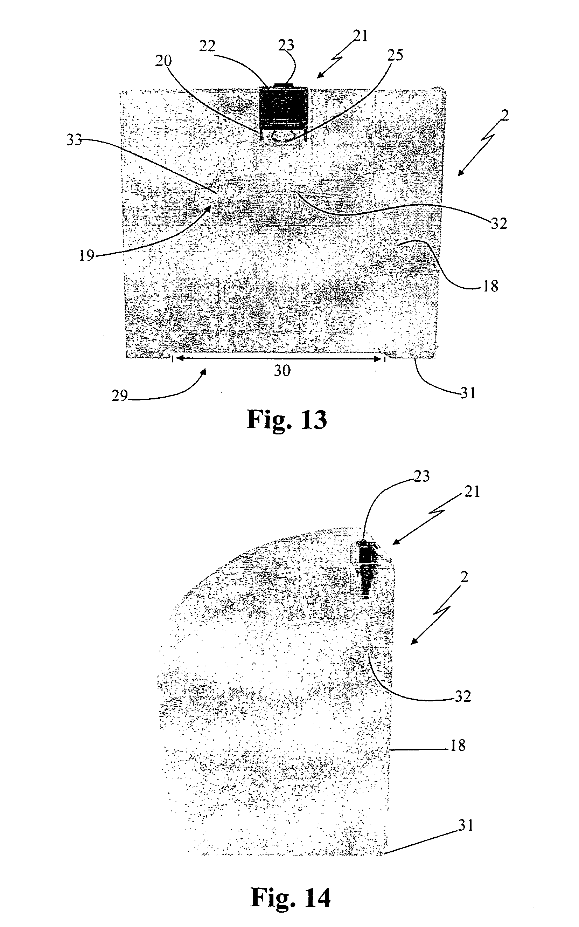

**FIGS. 13 and 14** show, respectively, a front view and a side view of a drawer of the drawer unit according to the invention;

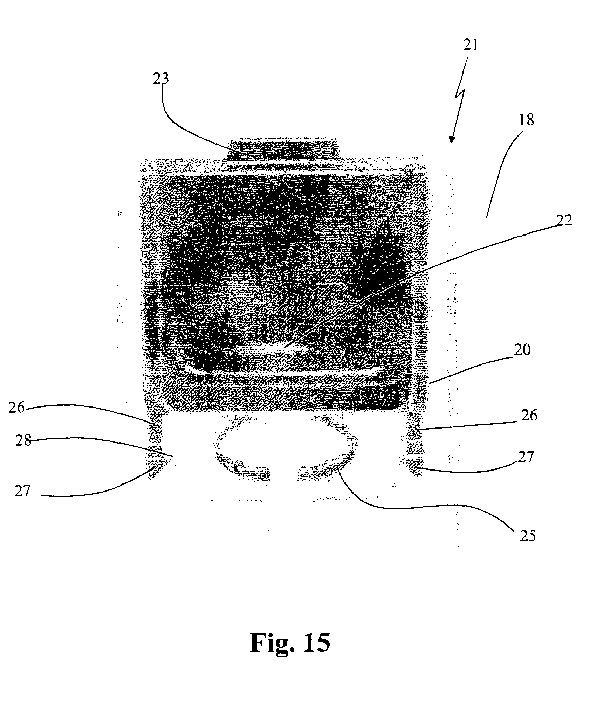

**FIG. 15** shows a front view of a detail of the drawer unit according to the invention, relating to an operating system for locking/releasing the drawer.

### Detailed description of a preferred embodiment

With reference to the attached drawings, 1 denotes overall the drawer unit for vans according to the present invention.

In the figures, for the sake of simplicity of illustration, a drawer unit 1 formed by a single row of drawers composed of only two drawers 2 arranged alongside each other has been shown. However, it must be understood in the description below that the drawer unit 1 may be similarly formed by any number of drawers 2 which may be arranged in one, two or more rows and may have similar or different dimensions, without thereby departing from the scope of protection of the present patent.

Each drawer 2 will be provided with a pivoting opening mechanism, already known per se, and for this reason not described in detail.

The most widely varying products, depending on the intended use of the drawer unit and more generally the van, may be stored and transported in an entirely conventional manner inside the drawer 2.

The drawers C are preferably made of transparent material for easy identification of the products contained inside them.

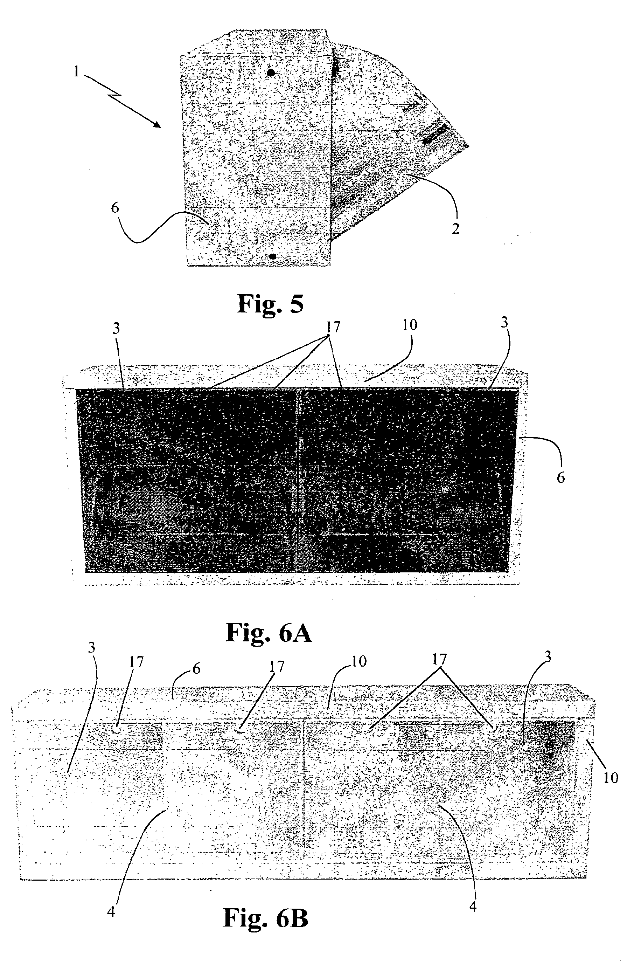

In greater detail, the drawer unit 1 is composed of a containing body 3 inside which one or more drawers 2 are inserted in a retained manner. In the case of Figure 6A, or Figures 9-12, each containing body is intended to retain a single drawer 2, while in the case of Figure 6B each containing body 3 houses two separate drawers 2, inside two separate chambers which are separated from each other by a dividing wall 4.

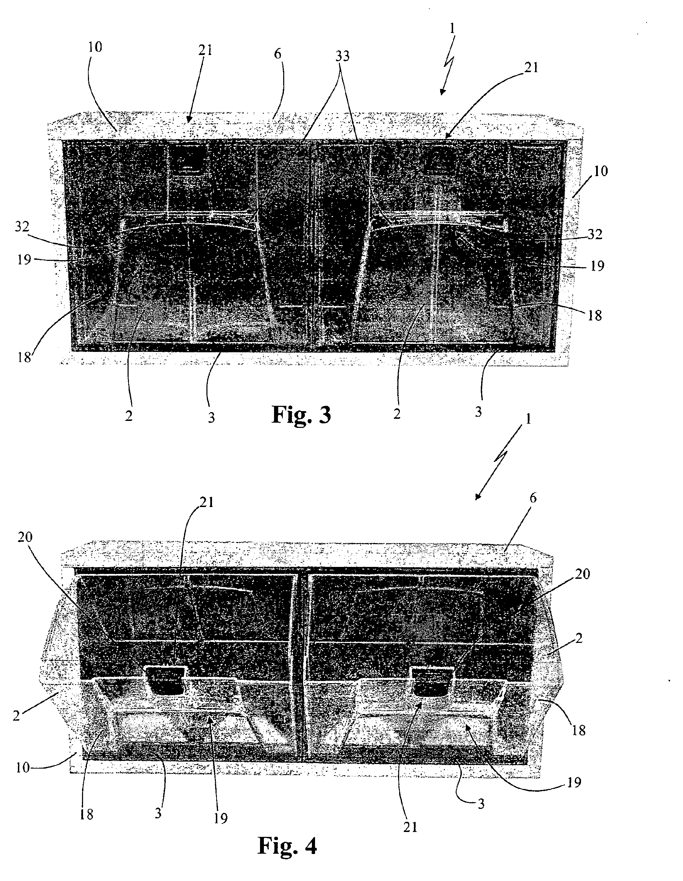

Each drawer 2 is pivotably mounted at the front, in the region of the base, on the containing body in order to cause pivoting between the closed position shown in Figure 3 and the open position shown in Figure 4. For this purpose, pins projecting laterally from the drawer 2 are provided, said pins being able to engage rotatably inside holes formed in the side walls 13 of the containing body 3. The same side walls 13 are also provided with two projecting arc-shaped cams for guiding the drawer 2 during its travel movement between the two open and closed end positions.

Owing to the axis of rotation of the drawer 2, which is displaced forwards, it is possible to keep the centre of gravity of the drawer 2 normally behind the axis such that, when the drawer is open, a brief movement backwards is required in order to cause the automatic return of the drawer into the closed position.

According to the idea forming the basis of the present invention, each containing body 3 with the associated drawers 2 mounted is retained inside a compartment 5 of a support frame 6 intended to be fixed to the inside of the van, by means of interlocking means.

The latter are composed of shaped teeth 7 which are formed on the top wall 8 and bottom wall 9 of the containing body 3 and engage, during assembly of the drawer unit 1, behind an edge 10 projecting from the front profile which defines the access to the compartment 5 of the support frame 6.

Engagement takes place by means of a resilient deformation of the walls 8 and 9 of the containing body 3, which flex during insertion of the containing body 3 inside the compartment owing to the pressure exerted by the teeth on the edge 10 until the said teeth have completely passed beyond the edge 10 itself and have snap-engaged behind the latter.

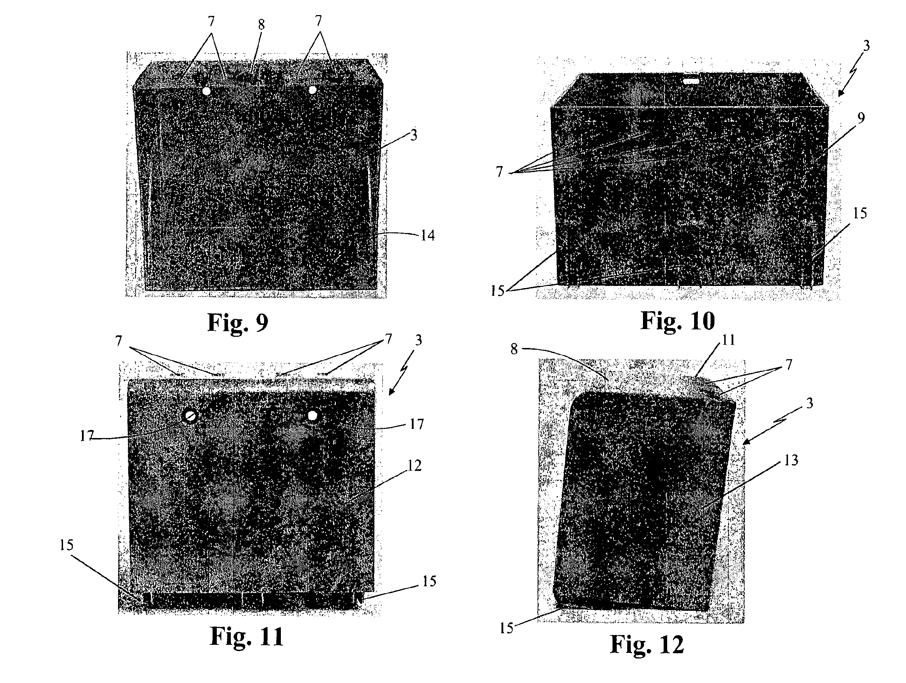

In order to facilitate insertion of the containing body 3 inside the compartment 5 of the support frame 6, the teeth 7 are shaped with the rear side 11 (see Figure 12) in the form of a receiving surface or with a progression which tapers towards the rear 12.

Support feet 15 are also envisaged, these projecting from the external face of the bottom wall 14 of the containing body 3 and adhering on the bottom of the compartment 5 of the support frame 6 (see Figures 10-12).

The feet 15 project over a distance equal to the height of the edge 10 so as to ensure that the bottom wall 14 of the containing body 3 is horizontal.

The frame 6 may be preferably made from a metal sheet which is suitably folded. In particular, the edge 10 forms a rim around the access profile of the compartment 5, which is obtained by means of a first fold able to define the height H thereof and a second fold able to define the depth P thereof.

An interspace closed frontally by the edge 10 is peripherally defined between the support frame 6 and the containing body 3.

This interspace has the function of allowing the insertion of fixing means able to connect rigidly the support frame 6 directly to the chassis of the van or to other modules which combine to form the furnishing thereof.

In greater detail the fixing means may consist of screws or bolts engaging in first holes or eyelets 16 formed in the walls of the support frame 6 and being housed inside the abovementioned interspace.

Advantageously, the rear wall 12 of the containing body 3 may also be provided with second holes 17 formed opposite first holes 16 in the support frame 6 for further fixing the containing body 3 to the support frame 6 by means of screws or similar means.

Each drawer 2 mentioned above has a front wall 18 made of transparent plastic and shaped so as to define a handle 19 and a seat 20, the latter for engagement of a locking device 21 able to allow locking and unlocking of the drawer 2 relative to the containing body 3.

In greater detail, the locking device 21 consists of a body made of plastic and provided with a gripping portion 22 which is operated manually with the finger of one hand so as to displace the operating body from a raised position, where a projection 23 engages inside a hole 24 formed in the top wall 8 of the containing body 3 in order to close the drawer 2, into a lowered position, where the projection is disengaged from the hole 24 so as to allow opening of the drawer 2.

Resilient means 25 are arranged between the bottom of the seat formed in the front wall 18 of the drawer 2 and the operating body, said means forcing the device 21 with the projection 23 into the closed position. Advantageously these resilient means 25 consist of a flexible ring-shaped flange which is formed as one piece with the remaining portion of the operating body by means of moulding.

The operating body also comprises two flexible legs 26 which are also formed as one piece by means of moulding with the operating body.

The legs 26 are contained inside guides formed in the front wall 18 of the drawer 2 and engage with the said guides by means of an end-of-travel tooth 27 gripping on an undercut formed in the guide or more simply gripping the edge of the end opening 28 of the guide from which the legs partially protrude.

The handle 19 formed by means of moulding in the shape of the front wall 18 of the drawer 2 consists of a depression 29 which extends, over a portion 30 of the width of the drawer 2, from the bottom edge 31 of the front wall 18 as far as a horizontal handle portion 32 which can be gripped so as to cause the opening pivoting movement of the drawer 2.

Advantageously, the abovementioned handle portion 32 extends and continues downwards with a gripping section 33 which is easy to pull for opening of the drawer 2.

The drawer unit 1 according to the invention offers a high degree of modularity in that the particular configuration of the support frame 2 allows easy fixing of the drawer unit to any other drawer unit module or to any other accessory or directly to the chassis of the van.

The drawer unit 1 also has an efficient and reliable separate locking system for each drawer 2. Moreover, the particular configuration of the handle 19 prevents interference with the movements of the persons operating on-board, as incidentally was instead the case with the drawer units known hitherto, and without substantially negatively affecting the loading capacity of the drawers.

The invention thus conceived therefore achieves the predefined objects.

Obviously it may assume, in its practical embodiment, also forms and configurations which are different from that illustrated above without, thereby, departing from the present scope of protection.

Moreover all the details may be replaced by technically equivalent parts, and the dimensions, forms and materials used may of any nature according to requirements.

## Claims

1. Drawer unit (1) for vans, which comprises:
- at least one drawer (2) with a pivoting opening system, intended to receive products to be stored and transported;
- a containing body (3) inside which said drawer (2) can be engaged and inside which it is able to rotate about an axis between an open position and a closed position;
- a support frame (6) intended to be fixed inside the van; **characterized in that** the support frame (6) defines a compartment (5) inside which said containing body (3) with said mounted drawer (2) is retained, owing to at least one tooth (7) formed on an outer wall of said containing body (3) and able to engage on an edge (10) projecting from the front profile of the compartment (5) of said support frame (6) following resilient deformation of said containing body (3).

2. Drawer unit (1) according to Claim 1, in which said support frame (6) is made of folded sheet metal, and said edge (10) is formed by means of at least two folds in succession able to form a rim of height (H) and depth (P).

3. Drawer unit (1) according to Claims 1 or 2, in which said teeth (7) are formed on the top wall (8) and/or on the bottom wall (9) of said containing body (3) .

4. Drawer unit (1) according to Claim 3, in which said teeth (7) have a side which tapers towards the rear (12) of the containing body (3) so as to define a receiving surface for insertion inside the compartment (5) of said support frame (6).

5. Drawer unit (1) according to any one of the preceding claims, in which an interspace is provided between said support frame (6) and said containing body (3) for the insertion of means for fixing said frame (6) to the van or to other modules.

6. Drawer unit (1) according to any one of the preceding claims, in which said support frame (6) is provided with a plurality of first holes or eyelets (16) for mounting said fixing means.

7. Drawer unit (1) according to Claim 2, in which said containing body (3) is provided on the bottom wall (14) with at least one foot (15) resting inside the compartment (5), in particular extending substantially over the height of the rim.

8. Drawer unit (1) according to Claim 1, in which said drawer (2) has a front wall (18) provided with a handle (19) and at least one seat (20) inside which a device (21) for locking the drawer (2) is engaged so as to lock and unlock the latter with respect to the containing body (3).

9. Drawer unit (1) according to Claim 8, in which said locking device (21) consists of an operating body made of plastic and able to be displaced by operating a gripping portion (22) thereof between a raised position, where a projection (23) engages inside a hole (24) formed in the top wall (8) of the containing body (3) in order to close the drawer (2), and a lowered position, where said projection (23) is disengaged from said hole (24) so as to allow opening of the drawer (2), resilient means (25) being provided between said seat (20) and said operating body so as to force the latter into said closed position, said resilient means (25) preferably consisting of a flexible, in particular ring-shaped, flange.

10. Drawer unit (1) according to Claim 9, in which said locking device (21) has two flexible legs (26) which can be inserted inside guides formed in the front wall (18) of the drawer (2) and engaged with them by means of an end-of-travel tooth (27).

11. Drawer unit (1) according to any one of the preceding claims, in which the front wall (18) has an inset handle (19) formed by means of a depression (29) extending along a portion (30) of the width of the drawer (2) from the bottom edge (31) of the front wall (18) as far as a gripping portion (32).

## Patentansprüche

1. Schubladenschrank (1) für Lieferwange, der umfasst:
- mindestens eine Schublade (2) mit Kippöffnung, die zum Aufnehmen von zu enthaltenden und transportierenden Gütern bestimmt ist;
- einen Aufnahmekörper (3), innerhalb dessen diese Schublade (2) in Eingriff gebracht werden kann und in dem sie um eine Achse zwischen einer geöffneten und einer geschlossenen Stellung drehen kann;
- einen Tragrahmen (6), der dazu bestimmt ist, innerhalb des Lieferwagens befestigt zu werden; **dadurch gekennzeichnet, dass** der Tragrahmen (6) ein Fach (5) definiert, innerhalb dessen der Aufnahmekörper (3) mit der eingebauten Schublade (2) dank mindestens eines Zahns (7) gehalten wird, der auf einer Außenwand des Aufnahmekörpers (3) ausgebildet ist und im Anschluss an eine elastische Verformung dieses Aufnahmekörpers (3) in einen aus dem vorderen Profil des Fachs (5) dieses Tragrahmens (6) vorstehenden Rand (10) eingreifen kann.

2. Schubladenschrank (1) nach Anspruch 1, bei dem der Tragrahmen (6) aus einem gebogenen Metallblech besteht und der Rand (10) durch mindestens zwei aufeinanderfolgende Biegungen realisiert ist, die geeignet sind, eine Umrandung mit der Höhe (H) und der Tiefe (P) zu realisieren.

3. Schubladenschrank (1) nach Anspruch 1 oder 2, bei dem die Zähne (7) auf der oberen Wand (8) und/oder auf der unteren Wand (9) des Aufhahmekörpers (3) ausgebildet sind.

4. Schubladenschrank (1) nach Anspruch 3, bei dem die Zähne (7) eine Seite haben, die sich zum hinteren Teil (12) des Aufnahmekörpers (3) hin verjüngt, um eine Fase zum Einsetzen in das Fach (5) des Tragrahmens (6) zu definieren.

5. Schubladenschrank (1) nach einem der vorherigen Ansprüche, bei dem zwischen dem Tragrahmen (6) und dem Aufnahmekörper (3) ein Hohlraum zum Einsetzen von Mitteln zum Befestigen des Rahmens (6) am Lieferwagen oder an anderen Modulen vorgesehen ist.

6. Schubladenschrank (1) nach einem der vorherigen Ansprüche, bei dem der Tragrahmen (6) mit einer Vielzahl erster Löcher oder Langlöcher (16) für die Montage der Befestigungsmittel versehen ist.

7. Schubladenschrank (1) nach Anspruch 2, bei dem der Aufnahmekörper (3) auf der unteren Wand (14) mit mindestens einem Fuß (15) zum Aufstützen im Innern des Fachs (5) versehen ist, der sich insbesondere im Wesentlichen über die Höhe der Umrandung erstreckt.

8. Schubladenschrank (1) nach Anspruch 1, bei dem die Schublade (2) mit einer vorderen Wand (18) versehen ist, die mit einem Griff (19) und mindestens einem Sitz (20) versehen ist, in den eine Vorrichtung (21) zum Arretieren der Schublade (2) für die Verriegelung und die Entriegelung letzterer in Bezug auf den Aufnahmekörper (3) eingreift.

9. Schubladenschrank (1) nach Anspruch 8, bei dem die Arretiervorrichtung (21) aus einem Steuerkörper aus Kunststoff besteht, der durch Betätigen eines seinen Greifabschnitts (22) zwischen einer angehobenen Stellung, in der ein Ansatz (23) in ein in der oberen Wand (8) des Aufnahmekörpers (3) ausgebildetes Loch (24) eingreift, um die Schublade (2) in der geschlossenen Stellung zu halten, und einer abgesenkten Stellung verschoben werden kann, in der dieser Ansatz (23) aus dem Loch (24) gelöst ist, um das Öffnen der Schublade (2) zu ermöglichen, wobei elastische Mittel (25) zwischen dem Sitz (20) und dem Steuerkörper vorgesehen sind, um diesen letzteren in die Schließstellung zu drücken, die vorzugsweise aus einem flexiblen, insbesondere ringförmigen Fortsatz bestehen.

10. Schubladenschrank (1) nach Anspruch 9, bei dem die Arretiervorrichtung (21) mit zwei flexiblen (26) Schenkeln versehen ist, die in auf der vorderen Wand (18) der Schublade (2) ausgebildete Führungen eingeführt und mit diesen mit Hilfe eines Endanschlagzahns (27) in Eingriff gebracht werden können.

11. Schubladenschrank (1) nach einem der vorherigen Ansprüche, bei dem die Vorderwand (18) mit einem versenkten Griff (19) versehen ist, der mit Hilfe einer Einbuchtung (29) hergestellt ist, die sich für einen Bereich (30) der Breite der Schublade (2) von der Unterkante (31) der Vorderwand (18) bis zu einem Griffbereich (32) erstreckt.

## Revendications

1. Coffre à tiroir (1) pour fourgons, lequel comprend :
- au moins un tiroir (2) avec ouverture basculante destiné à recevoir des produits à contenir et transporter ;
- un corps de logement (3) dans lequel peut être engagé ledit tiroir (2) et dans lequel il est en mesure de pivoter autour d'un axe entre une position ouverte et une position fermée ;
- un châssis porteur (6) destiné à être fixé à l'intérieur du fourgon ; **caractérisé en ce que** le châssis porteur (6) définit un compartiment (5) dans lequel est retenu ledit corps de logement (3) avec ledit tiroir (2) monté, grâce à au moins une dent (7) réalisée sur une paroi externe dudit corps de logement (3) et susceptible de s'engager sur un bord (10) faisant saillie à partir du profil antérieur du compartiment (5) dudit châssis porteur (6) à la suite d'une déformation élastique dudit corps de logement (3).

2. Coffre à tiroir (1) selon la revendication 1, dans lequel ledit châssis porteur (6) est constitué d'une tôle métallique pliée, et ledit bord (10) est réalisé au moyen d'au moins deux plis en succession adaptés pour réaliser un encadrement de hauteur (H) et de profondeur (P).

3. Coffre à tiroir (1) selon les revendications 1 o 2, dans lequel lesdites dents (7) sont réalisées sur la paroi supérieure (8) et/ou sur la paroi inférieure (9) dudit corps de logement (3).

4. Coffre à tiroir (1) selon la revendication 3, dans lequel lesdites dents (7) ont un côté qui se restreint vers la partie postérieure (12) du corps de logement (3) pour définir une amorce d'introduction dans le compartiment (5) dudit châssis porteur (6).

5. Coffre à tiroir (1) selon l'une quelconque des revendications précédentes, dans lequel, entre ledit châssis porteur (6) et ledit corps de logement (3), il est prévu un évidement pour l'introduction de moyens de fixation dudit châssis (6) au fourgon ou à d'autres modules.

6. Coffre à tiroir (1) selon l'une quelconque des revendications précédentes, dans lequel ledit châssis porteur (6) est pourvu d'une pluralité de premiers trous ou boutonnières (16) pour le montage desdits moyens de fixation.

7. Coffre à tiroir (1) selon la revendication 2, dans lequel ledit corps de logement (3) est muni sur la paroi inférieure (14) d'au moins un pied (15) d'appui à l'intérieur du compartiment (5), s'étendant en particulier sensiblement sur la hauteur de l'encadrement.

8. Coffre à tiroir (1) selon la revendication 1, dans lequel ledit tiroir (2) est pourvu d'une paroi antérieure (18) munie d'une poignée (19) et d'au moins un siège (20) dans lequel est engagé un dispositif (21) d'arrêt du tiroir (2) pour le blocage et le déblocage de ce dernier par rapport au corps de logement (3).

9. Coffre à tiroir (1) selon la revendication 8, dans lequel ledit dispositif d'arrêt (21) est constitué par un corps de commande en matière plastique susceptible d'être déplacé en agissant sur une portion de préhension (22) entre une position soulevée, dans laquelle une saillie (23) s'engage dans un trou (24) ménagé dans la paroi supérieure (8) du corps de logement (3) pour bloquer le tiroir (2) en position de fermeture et une position abaissée dans laquelle ladite saillie (23) est désengagée dudit trou (24) pour permettre l'ouverture du tiroir (2), des moyens élastiques (25) étant prédisposés entre ledit siège (20) et ledit corps de commande pour forcer ce dernier dans ladite position de fermeture, constitués de préférence par un appendice flexible, en particulier en forme d'anneau.

10. Coffre à tiroir (1) selon la revendication 9, dans lequel ledit dispositif d'arrêt (21) est muni de deux pieds flexibles (26) pouvant être insérés dans des guides ménagés dans la paroi antérieure (18) du tiroir (2) et engagés avec ceux-ci au moyen d'une dent de fin de course (27).

11. Coffre à tiroir (1) selon l'une quelconque des revendications précédentes, dans lequel la paroi antérieure (18) est munie d'une poignée encastrée (19) obtenue au moyen d'une dépression (29) s'étendant sur une portion (30) de la largeur du tiroir (2) à partir de l'arête inférieure (31) de la paroi antérieure (18) jusqu'à une portion de préhension (32).
